# EUROPEAN PATENT APPLICATION

(11) **EP 1 277 694 A2**
(43) Date of publication of application: **22.01.2003**
(21) Application number: 01830691.0
(22) Date of filing: 08.11.2001
(51) Int. Cl.: B67C 3/28, B65B 39/00, F16K 31/06, F16K 49/00

(54) **A dispenser device for fluid substances**

(30) Priority: 19.07.2001 IT BO20010463
(71) Applicant: AZIONARIA COSTRUZIONI MACCHINE AUTOMATICHE-A.C.M.A.-S.p.A., I-40131 Bologna (IT)
(72) Inventor: Berti, Andrea, 40024 Castel S. Pietro Terme (Bologna) (IT); Grassi, Stefano, 46014 Castellucchio (Mantova) (IT); de Antoni Migliorati, Narciso, 46040 Castiglione Delle Stiviere(Mantova (IT)
(74) Representative: Lanzoni, Luciano

(57) **Abstract**

A dispenser device (1) for fluid substances comprises a tubular body (2) with an opening (3) for the infeed of the fluid substances and a dispenser outlet (4). Inside the tubular body (2) there is a plug (8) for closing and opening the outlet (4). The plug (8) is moved between a lowered position in which it closes the outlet (4) and a raised position in which it frees the outlet (4), allowing the fluid substances to be dispensed, by an inductor (13) on the external surface of the tubular body (2) able to generate a magnetic field in the tubular body (2) which magnetises and moves the plug (8) relative to the tubular body (2). The plug (8) reaches the closing position by means of gravity when a control and adjustment unit (21) interrupts the electrical power supply to the inductor (13).

## Description

The present invention relates to a dispenser device for fluid substances.

In particular, the present invention is advantageous when applied in automatic filling machines equipped with a carrousel which supports a plurality of dispenser devices for filling containers with fluid substances.

Each dispenser device is designed to fill a preset quantity of fluid by gravity feed into a relative container positioned under the dispenser device.

It must be emphasised that, given the fact that the fluids dispensed may be of various natures and various viscosity, hereinafter reference is made to generic fluid substances in order to stress the general nature of the scope of application of the present invention.

As is known, dispenser devices normally consist of a cylindrical body at the end of which there is a hole for dispensing the fluid. Inside the cylindrical body there is a plug which has the twin functions of blocking the outlet hole to prevent the fluid from being dispensed and freeing the hole so that the fluid can pass through it.

Advantageously, the geometry of the plug and the hole are selected according to the fluid and the flow rate required.

Specifically, the plug is moved by mechanical or pneumatic controls outside the cylindrical body, which are operatively connected to the plug by drive rods or levers. The rods enter from the chamber holding the fluid by means of a hole in the top or side of the cylindrical body. In this situation, the hole must be fitted with a seal to prevent the fluid from escaping, or to prevent contaminating agents from entering the cylindrical body.

However, a major disadvantage of such devices is the inefficiency of the seal which, during axial or rotary movement of the connecting rods/levers, wears and does not guarantee its seal with the passage of time. It is, therefore, impossible to absolutely prevent any type of fluid infiltration and, as a result, the lubricant for moving mechanical parts may come into contact with the fluid.

Moreover, wear on the seals creates very small recesses in which the fluid is deposited, creating fluid residues which are difficult to clean.

Therefore, the device is not completely cleaned and sterilised.

To overcome these disadvantages, dispenser devices were developed in which the plug is moved by magnetic parts and where sealing parts are not required.

In particular, as described for example in publication EP 0 436 214, these devices consist of a first set of permanent magnets connected to the surface of the plug and opposite a second set of permanent magnets. The second set of permanent magnets is positioned on a sleeve mounted on the outer surface of the cylindrical body and, together with the first set of permanent magnets, constitutes a magnetic joint.

To raise the plug and allow the passage of fluid, the sleeve is moved pneumatically along the cylindrical body lengthways. Similarly, to close the hole, the sleeve is pushed downwards by the same type of pneumatic movement. In this way, the pneumatic and mechanical parts are never in contact with the fluid.

However, this embodiment also has disadvantages.

A first disadvantage is the fact that the distance between the first and second sets of permanent magnets must be very small in order to guarantee an effective magnetic connection, therefore, the plug must run in close contact with the internal surface of the cylindrical body. As a result, it is particularly difficult to clean the gap between the plug and the cylindrical body. Moreover, said gap forms a very small fluid passage section and often does not allow correct fluid passage, especially in the case of very viscous fluids.

Another disadvantage is due to the structural complexity of the devices, which require both mechanical and/or pneumatic movements and a magnetic joint. This structural complexity is particularly problematic in terms of production costs.

It should be noticed that the permanent magnets are subject to corrosion and so must be treated beforehand and coated with a rustproof material, thus increasing production costs.

In addition, the structural complexity of the devices considerably increases maintenance requirements.

Finally, a last disadvantage is caused by the closing system which, for example, if there is no pressure in the pneumatic circuit, does not guarantee a hermetic plug seal and thus allows the fluid to escape from the dispenser.

The aim of the present invention is to provide a fluid dispenser device in which the parts that move the plug are not bulky and do not make device cleaning and maintenance difficult due to their complexity and positioning.

Another aim of the present invention is to provide a dispenser device for fluid substances which is particularly simple to construct and, as a result, has low production costs.

Yet another aim of the present invention is to provide a dispenser device for fluid substances which is efficient in terms of safety even if the driver device parts fail to work.

Accordingly, the present invention provides a dispenser device for fluids comprising a tubular body with an infeed opening for the infeed of at least one fluid into the tubular body and an outlet for dispensing the fluid held in the tubular body. Inside the tubular body there is a plug which is mobile between a first position in which it closes the outlet and a second position in which it frees the outlet. There are also magnetic means for moving the plug, located on the outer surface of the tubular body. Said means move the plug from the first position to the second position and comprise an inductor element extending coaxially about the tubular body. The plug is made of a material which can be magnetised.

The present invention is now described with reference to the accompanying drawings, which illustrate a preferred embodiment without limiting the scope of the inventive concept, and in which:
- Figure 1 is a schematic side elevation with some parts in cross-section and other parts cut away for greater clarity, of a fluid dispenser device made in accordance with the present invention;
- Figure 2 is a cross-section along line II - II illustrated in Figure 1.

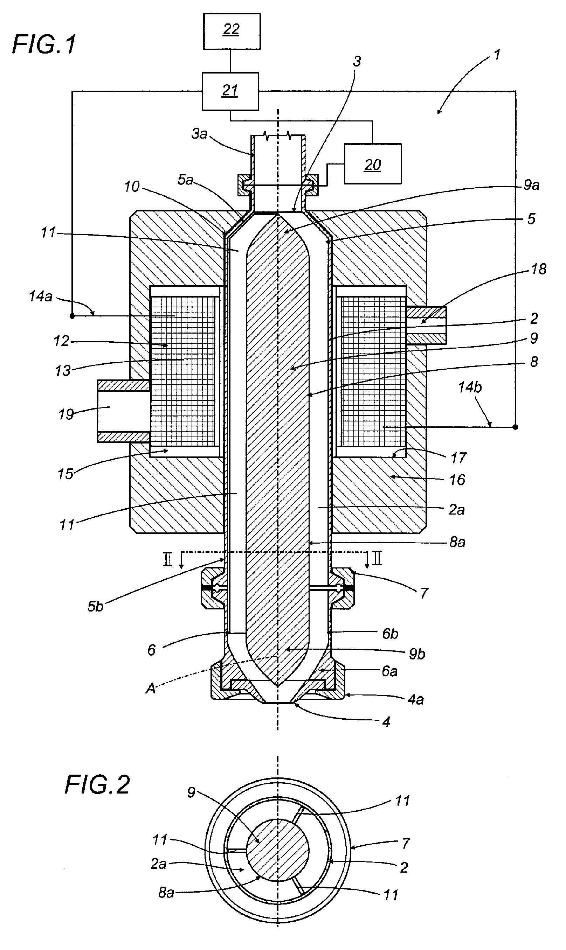

With reference to Figure 1, the numeral 1 denotes a dispenser device for fluid substances designed to be fitted on a carrousel which is part of an automatic filling machine of the known type and not illustrated, for filling containers, also not illustrated.

The device 1 comprises a tubular body 2 with a vertical axis A. At the upper end is an opening 3 for the infeed of a fluid into the tubular body 2.

The opening 3 is preferably, but not necessarily, connected by a pipe 3a, coaxial with the tubular body 2, to a tank of the known type and not illustrated in Figure 1, which is part of the automatic filling machine.

Opposite the opening 3 relative to the tubular body 2, there is an outlet 4 for dispensing the fluid held in the tubular body 2. The outlet 4 comprises a ring-shaped insert 4a which can be coaxially connected to the tubular body 2 at the outlet 4 to form the fluid passage section and to adapt the dispenser to various types of containers to be filled.

More specifically, the tubular body 2 consists of a first and a second tubular portion 5, 6 coaxially connected to one another and each having a first end 5a, 6a at the opening 3 and outlet 4, and a second end 5b, 6b opposite the first end 5a, 6a. The second ends 5b, 6b of the respective tubular portions 5, 6 are coaxially attached to one another by a mechanical connecting element 7.

Advantageously, the mechanical connecting element 7 may consist of a screw connection or any other type of known connection which guarantees a good seal between the two tubular portions 5, 6.

Inside the tubular body 2 there is a plug 8 which is mobile along the axis A, between a first, lowered position (not illustrated) in which it closes the outlet 4 and a second, raised position, illustrated in Figure 1, in which it frees the outlet 4 and allows the fluid substance to be dispensed.

The plug 8, in conjunction with the internal surface of the tubular body 2, forms an internal ring-shaped passage 2a through which the fluid can flow from the opening 3 to the outlet 4.

More specifically, the plug 8 is made of a material which can be magnetised and comprises a cylindrical body 9 with a first end 9a at the opening 3 and a second end 9b at the outlet 4. The cylindrical body 9 extends lengthways along the tubular body 2 and has a constant cross-section at least along a given section of the tubular body 2.

Advantageously, the plug 8 may be made of a ferromagnetic material, for example iron, soft steel or other types of steel, and the surface is coated with a layer 8a of material suitable for contact with the substances dispensed.

Both ends 9a, 9b are cone-shaped and the second end 9b in particular can be inserted inside the ring-shaped insert 4a in such a way that it blocks the outlet 4 when the plug 8 is in the first, lowered closing position.

The plug 8 also comprises spacer means 10 connected to the outer surface of the cylindrical body 9 and designed to keep the cylindrical body 9 in position coaxial with the tubular body 2.

Specifically, the spacer means 10 consist of a plurality of tabs 11 extending radially from the cylindrical body and able to connect with the inner surface of the tubular body 2. Figure 2 shows how the tabs 11 are set at regular angular intervals around the plug 8. In the embodiment illustrated, there are three tabs.

As illustrated in Figure 1, the tabs 11 extend longitudinally from the upper end 9a of the cylindrical body 9 to a point close to the lower end 9b, although they do not touch the latter.

As Figure 1 shows, the sections of the tabs 11 at the first end 9a are shaped to match the shape of the internal surface of the first end 5a of the first tubular portion 5. In this way, when the plug 8 is in the second, raised position, the tabs 11 are in contact with the internal surface of the end 5a.

The device 1 also comprises magnetic means 12 for moving the plug 8, which are located on the outer surface of the tubular body 2 and are designed to move the plug 8 from the first to the second position.

The magnetic means 12 consist of an inductor element 13 extending around the tubular body 2. The inductor element 13 is designed to create a magnetic field inside the tubular body 2 and can be switched between a condition in which it does not operate, allowing the plug 8 to drop into the first position and block the outlet 4 under the effect of gravity, and a second condition in which it is operating, in which a current is supplied to the inductor element 13 to produce the magnetic field designed to raise the plug 8 and place it in the second position.

Specifically, the inductor element 13 consists of a solenoid 14 extending about the tubular body 2 and positioned substantially next to its centre line.

With regard to this, it is useful to point out that the cylindrical body 9, extending lengthways along the tubular body 2, has a constant cross-section at least along the section of the cylindrical body 2 covered by the solenoid 14.

The solenoid 14 is made of a conductive material and has two end electrical cables, labelled 14a and 14b, designed to be connected to a central control and adjustment unit, illustrated with a block and labelled 21, in turn connected to an electrical supply line which is not illustrated.

The solenoid 14 is supplied with an energising current, to create magnetic field lines inside the solenoid 14 which are directed towards the opening 3.

The solenoid 14 is preferably contained in a ring-shaped cover 15 made of a material which is electrically and heat insulating and the magnetic movement means 12 comprise a ring-shaped support 16 arranged coaxially about the tubular body 2. The ring-shaped support 16 is advantageously made of a ferromagnetic material and has a ring-shaped chamber 17 extending coaxially with the tubular body 2 and designed to contain the inductor element 13.

The ring-shaped support 16 also comprises an infeed pipe 18 extending radially from the ring-shaped chamber 17 to allow fluid communication between an external air source, of the known type and therefore not described or illustrated, and the ring-shaped chamber 17.

Opposite the infeed pipe 18 there is an outfeed pipe 19, also extending radially from the ring-shaped chamber 17, allowing fluid communication between the ring-shaped chamber 17 and the outside. In this situation, the infeed pipe 18 allows air to flow at the ring-shaped chamber 17, cooling the inductor element 13 during operation. This flow exits to the outside through the outfeed pipe 19.

In practice, with reference to the dispenser device 1 closed condition, that is to say, the condition in which the plug 8 blocks the outlet 4 (first position), an energising current is supplied to the inductor element 13 to bring it to the operating condition. The passage of the current in the inductor element 13 creates a magnetic field in the solenoid 14 and in the tubular body 2.

In this situation the plug 8 is subject to the action of the magnetic field. It is magnetised and moved towards the infeed opening 3, freeing the outlet 4 (second position).

The plug 8 is, therefore, moved upwards until the section of the tabs 11 at the first end 9a of the cylindrical body 9 makes contact with the internal surface of the first end 5a of the first tubular portion 5. In this way, the fluid in the tubular body 2 is dispensed through the outlet 4.

Advantageously, the infeed opening 3 is fitted with a sensor 20 designed to detect the presence of the tabs 11 at the first end 9a to define the plug 8 second position. The sensor 20 is operatively connected to the central control and adjustment unit 21, which adjusts value of the energising current supplied to the solenoid 14.

In this situation, when the sensor 20 detects that the plug 8 is in the second, raised position, a signal is sent to the central control and adjustment unit 21, which lowers the current value until a magnetic field is obtained which is sufficient to keep the plug 8 in the second position.

Alternatively, in a second embodiment which is not illustrated, the sensor 20 may be substituted with a timer device schematically illustrated with a block 22 in Figure 1. In this case, the unit 21 is controlled by the timer device 22, which at a preset time sends a signal to the unit 21 which, in the same way as described above, lowers the current value. This preset time corresponds to the time in which the plug 8 moves from the first to the second position.

Advantageously, the current supplied is saved, since the magnetic field value required to raise the plug is greater than the magnetic field sufficient to keep the plug 8 still in a preset position.

The presence of the ring-shaped support 16 also allows a reduction in the magnetic reluctance and, therefore, a reduction in the current necessary to obtain an optimum magnetic field, saving more of the electrical energy needed for the movement, with the advantage of a significant reduction in costs.

When the plug 8 must be placed in the first position to interrupt fluid dispensing, the inductor element 13 is switched to the non-operating condition in which no current passes through the solenoid 14 and, therefore, the magnetic field is eliminated. As a result, the plug 8 falls towards the outlet 4 and closes it under the effect of gravity. Advantageously, closing of the outlet 4 by gravity is also guaranteed if the electrical power supply fails.

It should be noticed that the plug 8 is heavy enough to effectively seal the outlet 4.

Moreover, the inductor element 13 which tends to heat up due to the Joule effect when operating is cooled by the air flow through the infeed pipe 18 and the fluid held in the tubular body 2 does not risk being heated by the inductor element 13 thanks to the heat insulating effect of the cover 15.

It is important to observe that the absence of elements between the plug 8 and the internal surface of the tubular body 2 allows a particularly large ring-shaped passage 2a to be obtained without the distance between the plug 8 and magnetic means 12 influencing the movement of the plug 8. This is because the magnetic means 12 act directly upon the plug 8 and so the size of the cylindrical body 9 can be determined according to the size of the internal ring-shaped passage 2a to be obtained. In this way, the size of the ring-shaped passage 2 makes device cleaning easier, with consequent advantages in terms of hygiene.

It must be noticed that the fluid passage cross-section in the internal ring-shaped passage 2a is constant along the length of the ring-shaped passage 2a. Therefore, the fluid is not subject to vortices which would be created if the cross-section of the passage widened at a section of the ring-shaped passage 2a. The ring-shaped passage 2a cross-section may narrow at the outlet 4 to accelerate the fluid flow.

Moreover, the spiral tabs 11 may be positioned in helical fashion in such a way as to turn the plug 8 along its length during fluid flow. In this way, the tabs 11 scrape over the entire internal surface of the tubular element, removing any fluid residues deposited in the tubular body 2.

Another advantage is the possibility of separating the first and second tubular portions 5, 6, so as to easily remove the plug 8 and clean the inside of the tubular body 2.

Finally, the structural simplicity of the dispenser device 1 must be noticed. It does not require the use of any mechanical means for moving the plug 8. The absence of mechanical means therefore eliminates the need for device 1 maintenance, since the only moving part is the plug and there are neither springs nor seals.

## Claims

1. A dispenser device for fluid substances, comprising: a tubular body (2) with an infeed opening (3) for the infeed of at least one fluid substance into the tubular body (2) and an outlet (4) for dispensing the fluid held in the tubular body (2); a plug (8) housed in the tubular body (2) and mobile between a first position in which it closes the dispenser outlet (4) and a second position in which it frees the outlet (4), the tubular body (2) having an internal ring-shaped passage (2a) between the plug (8) and the internal surface of the tubular body (2); and magnetic means (12) for moving the plug (8), located on the outer surface of the tubular body (2) for moving the plug (8) from the first to the second position, the magnetic means (12) comprising an inductor element (13) extending coaxially around the tubular body (2), the plug (8) being made of a material which can be magnetised.

2. The device according to claim 1, **characterised in that** the inductor element (13) may be switched between a non-operating condition in which the plug (8) falls into the first condition under the effect of gravity, and an operating condition in which a current is supplied to the inductor element (13) to raise the plug (8) to the second position.

3. The device according to either of the foregoing claims, **characterised in that** the inductor element (13) comprises a solenoid (14) extending lengthways along the tubular body (2), the solenoid (14) being made of a conductive material.

4. The device according to any of the foregoing claims, **characterised in that** the magnetic means (12) for moving the plug also comprise a ring-shaped support (16) coaxially connected to the outer surface of the tubular body (2), the ring-shaped support (16) having a ring-shaped chamber (17) coaxial with the ring-shaped support (16) which contains the inductor element (13).

5. The device according to claim 4, **characterised in that** the ring-shaped support (16) also comprises an infeed pipe (18) for fluid communication between the ring-shaped chamber (17) and an air source, and at least one outfeed pipe (19) for fluid communication between the ring-shaped chamber (17) and the outside.

6. The device according to any of the foregoing claims, **characterised in that** the tubular body (2) comprises a first tubular portion (5) with a first end (5a) at the infeed opening (3) and a second end (5b) opposite the first (5a); a second tubular portion (6) having a first end (6a) at the outlet (4) and a second end (6b) opposite the first (6a); and a mechanical connecting element (7) in the second ends (5b, 6b) of the tubular portions (5, 6), coaxially engaging the second ends (5b, 6b).

7. The device according to any of the foregoing claims, **characterised in that** the plug (8) comprises a cylindrical body (9) with a first end (9a) at the infeed opening (3) and a second end (9b) opposite the first (9a), at the outlet (4); the first and second ends (9a, 9b) being substantially cone-shaped; and spacer means (10) connected to the outer surface of the cylindrical body (9) and able to make contact with the internal surface of the tubular body (2) to keep the cylindrical body (9) coaxial with the tubular body (2).

8. The device according to claim 7, **characterised in that** the cylindrical body (9) extends along the full length of the tubular body (2) and has a constant cross-section diameter.

9. The device according to claim 7, **characterised in that** the spacer means (10) comprise at least one tab (11) extending radially from the cylindrical body (9), the tab having a planar extension which is less than the cross-section of the internal ring-shaped passage (2a).

10. The device according to claim 9, **characterised in that** the spacer means (10) comprise a plurality of tabs (11) positioned radially at the first end (9a) of the cylindrical body (9).

11. The device according to any of the foregoing claims from 1 to 10, **characterised in that** the inductor element (13) is connected to a unit (21) which controls and adjusts the current supplied to the inductor element (13); there being a sensor (20) operatively connected to the unit (21), the sensor (20) being placed close to the infeed opening (3) so as to detect the position of the plug (8).

12. The device according to any of the foregoing claims from 1 to 11, **characterised in that** the inductor element (13) is connected to a unit (21) which controls and adjusts the current supplied to the inductor element (13); the unit (21) being controlled by a timer device (22) able to send a signal to the unit (21) after a given time which depends on the time required for the plug (8) to move from the first position to the second position; the value of the current supplied to the inductor (13) being lowered by the unit (21) upon receiving the signal from the timer device (22).
